# EUROPÄISCHE PATENTANMELDUNG

(11) **EP 0 749 941 A1**
(43) Veröffentlichungstag der Anmeldung: **27.12.1996**
(21) Anmeldenummer: 96109673.2
(22) Anmeldetag: 17.06.1996
(51) Int. Cl.: C01G 23/00, C01G 53/00, C01G 51/00

(54) **Titan-Verbindungen mit Hydrotalcit-Struktur**

(30) Priorität: 24.06.1995 DE 19523053
(71) Anmelder: BASF AKTIENGESELLSCHAFT, 67056 Ludwigshafen (DE)
(72) Erfinder: Lauth, Günter, Prof. Dr., 23909 Ratzenburg (DE)

(57) **Zusammenfassung**

Titanverbindungen der Zusammensetzung

[Me(II)₁₋ₓ Tiₓ Me(III)_{y} (OH)₂] B_{z} (I)

in der
- Me(II): ein 2-wertiges Metallion,
- Me(III): ein 3-wertiges Metallion,
- B: ein anorganisches oder organisches Anion,
- x: 0,05 bis 0,4,
- y: 0 bis 0,4 und
- z: die Summe aus 1-x, x und y bedeuten,
die eine Hydrotalcit-Struktur besitzt und das Titan zu 50 bis 100% in die Hydrotalcit-Schichten eingebaut ist, sowie ein Verfahren zu deren Herstellung.

## Beschreibung

Die vorliegende Erfindung betrifft neue Titan-Verbindungen mit Hydrotalcit-Struktur und ein Verfahren zu deren Herstellung.

Aus Chimia 24 (1970), Seite 99 bis 108 und Catal. Today 11 (1991), Seite 173 bis 301 sind Hydrotalcit-Verbindungen (Anionische Tone, Anionic clays, Hydrotalcit-ähnliche Verbindungen, Layered double hydroxides = LDH, Feitknecht-Verbindungen oder Doppelschichtstrukturen), das sind Mischhydroxid-Salzen zwei- und dreiwertiger Metalle in Doppelschichtstrukturen mit brucitähnlichen Schichtionen der allgemeinen Formel [Me(II)₁₋ₓ Me(III)ₓ (OH)₂]^{x+} B_{z}.

Charakteristisch für alle Hydrotalcit-Verbindungen ist eine Struktur, welche aus positiv geladenen Mischhydroxid-Schichten (Polykationen) besteht, zwischen denen sich zum Ladungsausgleich Anionen befinden. Zwischen den positiv geladenen Einheiten befinden sich neben den Anionen in der Regel auch Lösungsmittelmoleküle.

Die Struktur der Mischhydroxide, insbesondere der Abstand der Schichten voneinander, kann durch Röntgendiffraktometrie ermittelt werden. Diese Schichtabstände sind in der Regel von der Natur der Anionen B abhängig und können zwischen ca. 4 und 45 Å betragen.

Bisher sind Hydrotalcit-Verbindungen bekannt, deren Schichten z.B. die Elemente Magnesium, Zink, Eisen, Kupfer, Nickel, Aluminium, Chrom, Scandium oder Kobalt enthalten, beschrieben.

Aus Inorg. Chem. 32, 5000 (1993) sind Hydrotalcit-Verbindung bekannt, deren Schichten Vanadin enthalten.

Titan-haltige Hydrotalcit-Verbindungen wurden bisher nicht beschrieben. In Catal. Today 11 (1991) Seite 173 bis 301 auf den Seiten 182 und 183 wird die Nichtexistenz dieser Verbindungen beschrieben und auf die Instabilität von Ti³⁺ zurückgeführt.

Die bislang bekannten Hydrotalcit-Verbindungen lassen in ihren Eigenschaften zu wünschen übrig.

Der vorliegenden Erfindung lag daher die Aufgabe zugrunde, den zuvor genannten Nachteilen abzuhelfen.

Demgemäß wurden neue Titanverbindungen der Zusammensetzung

[Me(II)₁₋ₓ Tiₓ Me(III)_{y} (OH)₂] B_{z} (I)

in der
- Me(II): ein 2-wertiges Metallion,
- Me(III): ein 3-wertiges Metallion,
- B: ein anorganisches oder organisches Anion,
- x: 0,05 bis 0,4,
- y: 0 bis 0,4 und
- z: die Summe aus 1-x, x und y bedeuten,
gefunden, welche dadurch gekennzeichnet sind, daß die Verbindung eine Hydrotalcit-Struktur besitzt und das Titan zu 50 bis 100% in die Hydrotalcit-Schichten eingebaut ist, sowie ein Verfahren zu deren Herstellung.

Charakteristisch für die Titan-Verbindungen I ist ihre Hydrotalcit-Struktur, welche sich aus dem typischen Röntgendiffraktogramm ersehen läßt.

Liegen die erfindungsgemäßen Titan-Verbindungen I in der Carbonat-Form vor (B = CO₃²⁻), so zeigen die Röntgendiffraktogramme der Verbindungen ein Beugungsmuster, welches dem Diffraktogramm des in der JCPDS-Datei als Index 22-700 gespeicherten Referenz-Hydrotalcits entspricht.

Falls die erfindungsgemäßen Titan-Verbindungen I in einer anderen als der Carbonat-Form vorliegen und sich damit der Hydrotalcit-Schichtabstand ändert, können sich die Lage der Röntgenlinien (insbesondere der (003)- und des (006)-Peaks) in bekannter Weise verschieben. Für den Fachmann ist aber in jedem Fall das Vorliegen einer Hydrotalcit-Struktur aus dem typische Muster des Röntgendiffraktogramms ersichtlich (Catal. Today **11** (1991), Seiten 192 bis 194).

Bei den erfindungsgemäßen Titan-Verbindungen I ist das Titan in der Regel ein Bestandteil der Hydrotalcit-Schichten, bevorzugt ist das Titan zu 50 bis 100%, bevorzugt zu 70 bis 100%, besonders zu 90 bis 100%, insbesondere zu 100% ein Bestandteil der Hydrotalcit-Schichten.

Die Bestandteile und die Indizes der erfindungsgemäßen Titanverbindungen I haben folgende Bedeutungen:
- Me(II): ein 2-wertiges Metallion wie beispielsweise Magnesium, Zink, Nickel, Cobalt, Kupfer, Calcium oder deren Gemische, bevorzugt Magnesium, Zink, Calcium oder deren Gemische, besonders bevorzugt Magnesium,
- Me(III): ein 3-wertiges Metallion wie beispielsweise Aluminium, Eisen, Vanadin, Chrom oder deren Gemische, bevorzugt Aluminium,
- B: ein anorganisches oder organisches Anion, beispielsweise anorganische Anionen wie Carbonat, Sulfat, Hydroxid, Chlorid, Nitrat oder deren Gemische, bevorzugt Carbonat, oder organische Anionen wie Acetat, Benzoat oder Terephthalat,
- x: 0,05 bis 0,4, bevorzugt 0,07 bis 0,35, besonders bevorzugt 0,1 bis 0,3,
- y: 0 bis 0,4, bevorzugt 0 bis 0,35, besonders bevorzugt 0 bis 0,3 und
- z: die Summe aus 1-x, x und y.

### Herstellung der erfindungsgemäßen Titan-Verbindungen kann wie folgt durchgeführt werden:

Es eignen sich im Prinzip alle Präparationsmethoden für Hydrotalcit-Verbindungen, beispielsweise diejenigen, die in Chimia 24 (1970), Seite 99 bis 108 und Catal. Today 11 (1991), Seite 173 bis 301 beschrieben sind. Besonders bevorzugt für die Herstellung ist die nachstehend beschriebene Methode der Fällung.

Man kann eine Lösung A, die eine lösliche Titanverbindung sowie mindestens ein zweiwertiges Element in einer löslichen Verbindung enthält, mit einer Lösung B, die Hydroxidionen und gegebenenfalls weitere Anionen enthält, bei Temperaturen von 20 bis 150°C, bevorzugt 40 bis 120°C, besonders bevorzugt 50 bis 100°C und pH-Werten von 7 bis 14, bevorzugt 8 bis 12, besonders bevorzugt 8 bis 10 vereinigen. Die Titan-Verbindung mit Hydrotalcit-Struktur fällt in der Regel aus dieser Mischung aus und kann als reine Phase abgetrennt werden.

In der Lösung A kann als Titanverbindung bevorzugt eine lösliche Titanverbindung wie z.B. Titan-(III)-chlorid oder Titan-(IV)-acetylacetonat, besonders bevorzugt Verbindungen des dreiwertigen Titans eingesetzt werden. Als zweiwertige Elemente [Me(II)] eignen sich beispielsweise Magnesium, Zink, Nickel, Cobalt, Kupfer, Calcium oder deren Gemische, bevorzugt Magnesium, Zink, Calcium oder deren Gemische z.B. in Form ihrer löslichen Chloride oder Nitrate. Besonders bevorzugt ist Magnesium. Zusätzlich kann die Lösung auch dreiwertige Elemente in löslicher Form enthalten, beispielsweise Aluminium, Eisen, Vanadin, Chrom oder deren Gemische, z.B. als lösliche Nitrate.

Die Lösung B enthält in der Regel gelöstes Alkalihydroxid, bevorzugt in Wasser. Zusätzlich enthält die Lösung B in der Regel kann die Lösung ein oder mehrere zusätzliche Anionen in gelöster Form, beispielsweise anorganische Anionen wie Carbonat, Sulfat, Hydroxid, Chlorid, Nitrat oder deren Gemische, bevorzugt Carbonat, z.B. als Na₂CO₃ oder organische Anionen wie Acetat, Benzoat, Terephthalat oder deren Gemische.

Um eine mögliche Oxidation der Komponenten in den Lösungen A und B zu unterdrücken, werden diese Lösungen in der Regel im wesentlichen in Abwesenheit von Sauerstoff, bevorzugt in sauerstoffreier Atmosphäre, besonders bevorzugt in sauerstoffreier Atmosphäre und in sauerstoffreiem Lösungsmittel, bevorzugt Wasser hergestellt und umgesetzt.

Die beiden Lösungen A und B werden in der Regel bei Temperaturen von 20 bis 150°C, bevorzugt 40 bis 120°C, besonders bevorzugt 50 bis 100°C und konstanten oder variablen pH-Werten von 7 bis 14, bevorzugt 7,5 bis 12, besonders bevorzugt 8 bis 10 vereinigt. Dies geschieht in der Regel so, daß die beiden Lösungen unter intensivem Rühren miteinander gemischt werden. Dabei fallen die erfindungsgemäßen Titan-Verbindungen I in der Regel aus.

Der Fällung kann ein Alterungsschritt und/oder eine hydrothermale Behandlung, z.B. in einem Autoklaven angeschlossen werden. Der erhaltene Niederschlag kann nach bekannten Methoden abgetrennt, z.B. abfiltriert und gewaschen werden.

Die Titan-haltige Verbindung mit Hydrotalcit-Struktur kann - wie für Hydrotalcit-Verbindungen charakteristisch - in vielfacher Weise nachträglich modifiziert werden. So ist beispielsweise ein Anionenaustausch, eine Temperaturbehandlung oder eine Behandlung mit einem organischen Additiv (z.B. zur Hydrophobierung) möglich.

Anionenaustausch und Temperaturbehandlung von Hydrotalcit-Verbindungen sind z.B. analog Catal. Today **11** (1991), Seite 173 bis 301 möglich. Die Modifikation von Hydrotalcit-Verbindungen mit organischen Additiven ist z.B. in DE-A-43 25 237 beschrieben.

Derartige Modifikationen können die Eigenschaften der Verbindung, insbesondere die Adsorptions- und katalytischen Eigenschaften der Verbindung, wesentlich beeinflussen.

Neben der Herstellung von Hydrotalcit-Verbindungen durch Fällung gibt es auch weitere Synthese-Möglichkeiten dieser Verbindungen. Beispielsweise können die Verbindungen auch ausgehend von reinen Metalloxiden präpariert werden.

Die erfindungsgemäßen Titan-Verbindungen mit Hydrotalcit-Struktur können, gegebenenfalls nach einer der oben angeführten Modifikationen, als Adsorbentien, Katalysatoren - insbesondere als Oxidationskatalysatoren - oder als Stabilisatoren (z.B. für Kunststoffe) eingesetzt werden.

### Beispiele

Für alle Lösungen wurde sauerstofffreies Wasser eingesetzt und alle Operationen wurden unter inerter Atmosphäre durchgeführt.

### Beispiel 1

### Herstellung einer Titan-Magnesium-Verbindung mit Hydrotalcit-Struktur

200 ml einer Mischung aus einer 0,5-molaren Titanchlorid- und einer 1-molaren Magnesiumchloridlösung, wurde tropfenweise zu 250 ml einer Mischung aus einer 0,8-molaren Natriumcarbonat- und einer 2,8-molaren Natriumhydroxidlösung zugegeben, 2 Stunden bei Raumtemperatur gerührt und 4 Tage bei 150°C in einem Autoklaven hydrothermal behandelt. Anschließend wurde der Feststoff filtriert, gewaschen und bei 120°C 5 Stunden getrocknet. Die chemische Analyse des Niederschlags ergab 12,5 Gew.-% Titan und 23 Gew.-% Magnesium, woraus sich als Zusammensetzung [Mg₆Ti₂(OH)₁₆]CO₃ · 4 H₂O ergab.

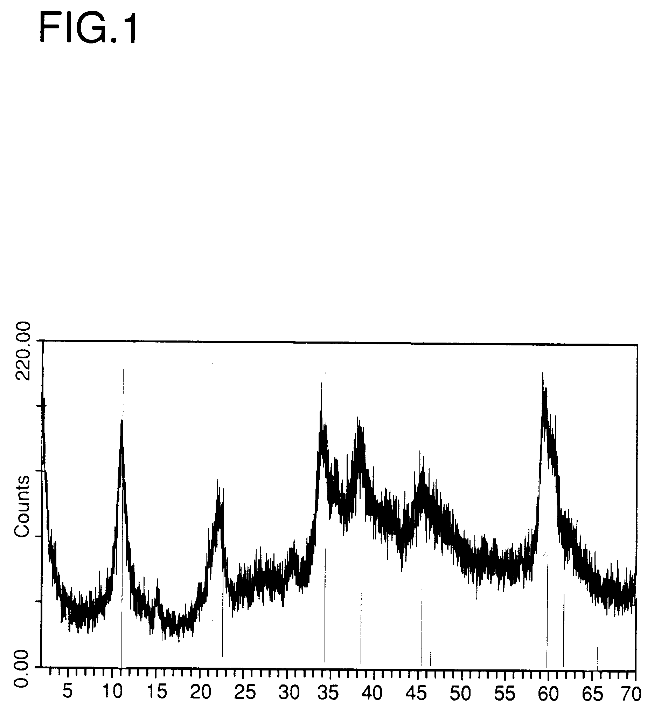

Das Röntgenbeugungsdiagramm des Materials wurde mit Cu-Kα-Strahlung aufgenommen und ist in Abbildung 1 dargestellt.

Das Diagramm zeigt die typische Beugungsmuster einer Verbindung mit Hydrotalcit-Struktur. Zum Vergleich ist in Abbildung 1 die Lage der Beugungslinien von Magnesium-Aluminium-Hydrotalcit (JCPDS-Datei Index 22-700) skizziert.

### Beispiel 2

### Herstellung einer Titan-Magnesium-Aluminium-Verbindung mit Hydrotalcit-Struktur

Die auf 80°C erwärmten Mischung aus 100 ml einer 2-molaren Titan-(III)-chlorid- und 100 ml einer 2-molaren Aluminiumchloridlösung, die zu 600 ml einer 2-molaren Magnesiumchloridlösung gegeben wurde eine Mischung aus 160 g Natriumhydroxid und 42,4 g Natriumcarbonat gelöst in 1000 ml Wasser wurden bei einem annähernd kostanten pH-Wert von 9 innerhalb 30 Minuten zusammengegeben, 2 Stunden bei 80°C gerührt, abfiltriert, gewaschen und bei 120°C 5 Stunden getrocknet. Man erhielt 162,3 g eines weißes Pulvers, das nach chemischer Analyse 7,5 Gew.-% Titan, 4,2 Gew.-% Aluminium und 23,1 Gew.-% Magnesium aufwies, woraus sich als Zusammensetzung [Mg₆TiAl(OH)₁₆]CO₃ · 4 H₂O ergab.

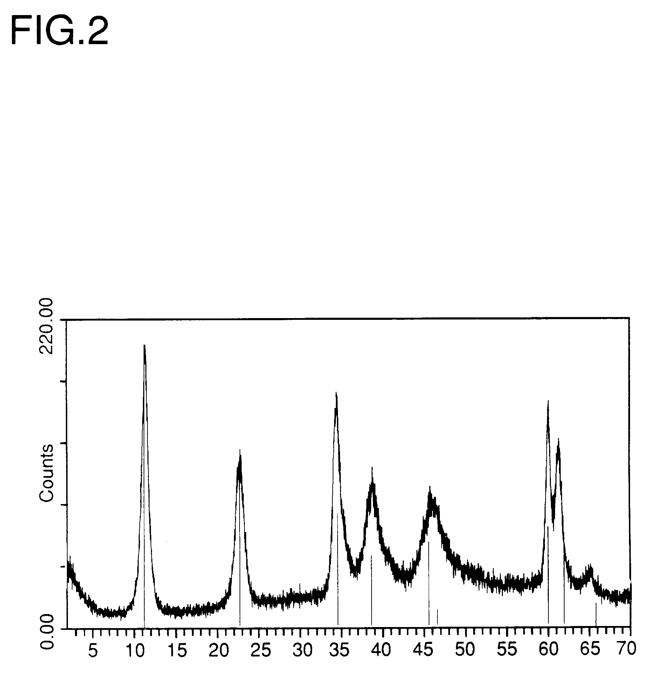

Das Röntgenbeugungsdiagramm des Materials wurde mit Cu-Kα-Strahlung aufgenommen und ist in Abbildung 2 dargestellt.

Das Diagramm zeigt die typische Beugungsmuster einer Verbindung mit Hydrotalcit-Struktur. Zum Vergleich ist in Abbildung 2 die Lage der Beugungslinien von Magnesium-Aluminium-Hydrotalcit (JCPDS-Datei Index 22-700) skizziert.

## Patentansprüche

1. Titanverbindungen der Zusammensetzung
[Me(II)₁₋ₓ Tiₓ Me(III)_{y} (OH)₂] B_{z} (I)
in der
Me(II) ein 2-wertiges Metallion,
Me(III) ein 3-wertiges Metallion,
B ein anorganisches oder organisches Anion,
x 0,05 bis 0,4,
y 0 bis 0,4 und
z die Summe aus 1-x, x und y bedeuten,
dadurch gekennzeichnet, daß die Verbindung eine Hydrotalcit-Struktur besitzt und das Titan zu 50 bis 100% in die Hydrotalcit-Schichten eingebaut ist.

2. Titanverbindungen nach Anspruch 1, dadurch gekennzeichnet, daß Me(II) für Magnesium, Zink, Nickel, Cobalt, Kupfer, Calclium oder deren Gemische, Me(III) für Aluminium, Eisen, Vanadin, Chrom oder deren Gemische und B für Carbonat, Sulfat, Hydroxid, Chlorid, Nitrat, Acetat, Benzoat, Terephthalat oder deren Gemische steht.

3. Titanverbindungen nach den Ansprüchen 1 und 2, dadurch gekennzeichnet, daß Me(II) für Magnesium steht.

4. Titanverbindungen nach den Ansprüchen 1 bis 3, dadurch gekennzeichnet, daß Me(III) für Aluminium steht.

5. Titanverbindungen nach den Ansprüchen 1 bis 4, dadurch gekennzeichnet, daß B für Carbonat steht.

6. Verfahren zur Herstellung von Titan-Verbindungen mit Hydrotalcit-Struktur nach den Ansprüchen 1 bis 5, dadurch gekennzeichnet, daß man eine Lösung, die mindestens eine gelöste Titanverbindung und mindestens eine Verbindung eines zweiwertigen Metalls enthält, mit einer Lösung, die mindestens Hydroxidionen enthält, bei einem pH-Wert 7 bis 14 umsetzt.

7. Verfahren zur Herstellung von Titan-Verbindungen mit Hydrotalcit-Struktur nach Anspruch 6, dadurch gekennzeichnet, daß man die Lösungen bei einem pH-Wert 7,5 bis 12 umsetzt.

8. Verfahren zur Herstellung von Titan-Verbindungen mit Hydrotalcit-Struktur nach den Ansprüchen 6 und 7, dadurch gekennzeichnet, daß man als lösliche Titanverbindungen Verbindungen des dreiwertigen Titans einsetzt.

9. Verfahren zur Herstellung von Titan-Verbindungen mit Hydrotalcit-Struktur nach den Ansprüchen 6 und 8, dadurch gekennzeichnet, daß man die Umsetzung im wesentlichen in Abwesenheit von Sauerstoff durchführt.
